# EUROPEAN PATENT APPLICATION

(11) **EP 2 378 598 A2**
(43) Date of publication of application: **19.10.2011**
(21) Application number: 09837682.5
(22) Date of filing: 30.12.2009
(51) Int. Cl.: H01M 8/04, F22B 33/18

(54) **STEAM GENERATOR FOR FUEL CELL WITH DUAL USE FOR HEATING FUEL ELECTRODE GAS**

(30) Priority: 12.01.2009 KR 20090002345
(71) Applicant: Doosan Heavy Industries & Construction Co., Ltd., Gyeongsangnam-do 641-792 (KR)
(72) Inventor: PARK, Jong Seung, Daejeon 305-741 (KR); BAEK, Seung Ho, Daejeon 305-791 (KR); LEE, Gi Pung, Daejeon 305-770 (KR); LEE, Tae Won, Daejeon 305-769 (KR); MOON, Kil Ho, Daejeon 302-772 (KR); KIM, Yun Seong, Daejeon 305-728 (KR); CHANG, In Gab, Daejeon 305-770 (KR)
(74) Representative: Kador & Partner
(86) International application number: PCT/KR2009/007975
(87) International publication number: WO 2010/079922

(57) **Abstract**

The steam generator for a fuel cell with dual use for heating fuel electrode gas according to the invention is configured as a single unit comprising a steam generator (100) that heats introduced water to generate steam, a steam superheater (200) that is connected to the steam generator (100) and used to supply superheat to the steam in order to elevate the temperature of the steam, and a fuel electrode gas heater (300) that is used to supply heat to the fuel electrode gas in order to elevate the temperature of the fuel electrode gas. The steam generator (100), steam superheater (200) and fuel electrode gas heater (300) are connected with an air electrode exhaust gas flow path through which the air electrode exhaust gas passes, to receive heat supply through heat exchange.

## Description

### Technical Field

The present invention relates to a steam generator for a fuel cell with dual use for heating fuel electrode gas, and, more particularly, to a steam generator for a fuel cell with dual use for heating fuel electrode gas, which is configured as a single unit comprising a steam generator, a steam superheater, and a fuel electrode gas heater and which may receive heat supplied from air electrode exhaust gas, thereby reducing the size of a fuel cell system and precisely controlling droplets.

### Background Art

Internal reforming molten carbonate fuel cells are a molten carbonate fuel cell directly using, as fuel, hydrogen produced from a methane-water vapor reforming catalyst charged in a fuel cell stack, and are advantageous because the manufacturing cost is low and heat produced upon electrode reactions may be used for endothermic reforming reactions, and also because hydrogen produced at portions adjacent to electrodes is directly continuously supplied to the reaction, thus leading to expectation of a high conversion of fuel.

The reforming reactions are classified into methane reforming and aqueous phase reforming, both of which require water supply. However, water severely damages a catalyst, and also because water causes uniform reaction only when uniformly mixed with supplied fuel gas, conversion into steam and mixing with supplied fuel gas should be achieved. Furthermore, in the case of steam, it has problems in that supplied water must be 100% converted into steam because the flow rate of steam is very difficult to measure.

US Patent No. 7,264,234 and US Patent Application No. 2006/0097412 A1 disclose a gas-mixed steam generator used for a conventional internal reforming molten carbonate fuel cell system. The gas-mixed steam generator is provided in the form of a heat exchanger so that water is supplied using a plate-fin type and steam is produced using air electrode exhaust gas and thus the size thereof is greatly decreased, but a water supplier is manufactured in such a manner that it is inserted into a plurality of injection tubes from a single header and then fixed thereto using welding, undesirably incurring high manufacturing cost. Moreover, because the direction of steam is in a gravity direction, the probability of water droplets flowing downwards may increase, and water is not 100% converted into steam, making it difficult to precisely control droplets (a steam/carbon ratio: S/C ratio).

Accordingly with the goal of solving such conventional problems, the present inventors have developed a steam generator for a fuel cell with dual use for heating fuel electrode gas, which is configured as a single unit comprising a fuel electrode gas heater, a steam generator and a steam superheater, thus markedly decreasing the size of connection pipes, thereby reducing the size of a fuel cell system, and also in which heat exchange may be performed using air electrode exhaust gas as a heat source, without additional supply of thermal energy, and also in which the direction of steam is set to an opposite gravity direction in the steam generator and the steam superheater, thus increasing the residence time of droplets and achieving complete steaming via heat source supply, thereby precisely controlling the droplets, and also in which the temperature of fuel electrode gas may be elevated to be high, and easy fabrication and reduced fabrication cost may be accomplished.

### Disclosure

### Technical Problem

Therefore, the present invention has been made keeping in mind the above problems occurring in the related art, and an object of the present invention is to provide a steam generator for a fuel cell with dual use for heating fuel electrode gas, which is configured as a single unit comprising a steam generator, a steam superheater and a fuel electrode gas heater, thus considerably decreasing the size of connection pipes, thereby reducing the size of a fuel cell system.

Another object of the present invention is to provide a steam generator for a fuel cell with dual use for heating fuel electrode gas, in which heat exchange may be performed using air electrode exhaust gas as a heat source, without additional supply of thermal energy, so that heat is supplied to a steam generator, a steam superheater and a fuel electrode gas heater.

In addition, another object of the present invention is to provide a steam generator for a fuel cell with dual use for heating fuel electrode gas, which includes a steam generator and a steam superheater in which the direction of steam is set to an opposite gravity direction, thus increasing the residence time of droplets and achieving complete steaming via heat source supply, thereby precisely controlling the droplets.

In addition, another object of the present invention is to provide a steam generator for a fuel cell with dual use for heating fuel electrode gas, in which the temperature of fuel electrode gas may be elevated to be high via heat exchange of air electrode exhaust gas.

In addition, another object of the present invention is to provide a steam generator for a fuel cell with dual use for heating fuel electrode gas, which may be easily manufactured and may be decreased in production and manufacturing costs.

### Technical Solution

The present invention provides a steam generator for a fuel cell with dual use for heating fuel electrode gas, which is configured as a single unit comprising a steam generator 100 for heating introduced water to generate steam, a steam superheater 200 for supplying superheat to the steam to elevate the temperature of the steam, and a fuel electrode gas heater 300 for supplying heat to fuel electrode gas to elevate the temperature of the fuel electrode gas.

The present invention provides a steam generator for a fuel cell with dual use for heating fuel electrode gas, which is configured as a single unit comprising a steam generator 100 that heats introduced water to generate steam, a steam superheater 200 that is connected to the steam generator 100 and supplies superheat to the steam in order to elevate the temperature of the steam, and a fuel electrode gas heater 300 that supplies heat to the fuel electrode gas in order to elevate the temperature of the fuel electrode gas, and in which the steam generator 100, the steam superheater 200 and the fuel electrode gas heater 300 are connected with an air electrode exhaust gas flow path through which the air electrode exhaust gas passes, to receive heat supply via heat exchange.

Preferably, the steam generator 100 includes a steam generator chamber 110 and steam generator tube sheets 120.

Preferably, the steam generator 100 is provided with a purified water inlet through which high-pressure purified water is introduced, and the introduced water is heat exchanged with the air electrode exhaust gas of the air electrode exhaust gas flow path by means of tube sheets 120 for heat exchange and is thus evaporated into steam.

Preferably, the steam superheater 200 includes a steam superheater chamber 210, steam superheater tube sheets 220, and a steam superheater inlet-outlet separator 230.

Preferably, the steam superheater 200 is provided with a steam inlet through which steam generated from the steam generator 100 is fed, and the fed steam is heat exchanged with the air electrode exhaust gas of the air electrode exhaust gas flow path by means of U-shaped steam superheater tube sheets 220 and is thus superheated and then discharged to the outside via a steam outlet.

Preferably, the fuel electrode gas heater 300 includes a fuel electrode gas heater chamber 310, fuel electrode gas heater tube sheets 320, and a fuel electrode gas heater inlet-outlet separator 330.

Preferably, the fuel electrode gas heater 300 is provided with a fuel electrode gas inlet through which fuel electrode gas is fed, and the fed fuel electrode gas is heat exchanged with the air electrode exhaust gas of the air electrode exhaust gas flow path by means of U-shaped fuel electrode gas heater tube sheets 320 and is thus elevated in temperature, and then discharged to the outside via a fuel electrode gas outlet.

Preferably, the steam superheater 200 further comprises a pressure check connector 240 for controlling pressure. Furthermore, the pressure check connector 240 is preferably formed over the steam outlet F of the steam superheater 200.

Preferably, the steam generator 100 and the steam superheater 200 are connected to each other using an extendable tube 130.

Preferably, the steam generator 100 further comprises a preheater 400.

Preferably, the tube sheets are U-shaped tube sheets.

Preferably, the steam generator for a fuel cell with dual use for heating fuel electrode gas further comprises a small heat exchanger.

### Advantageous Effects

According to the present invention, a single unit comprising a steam generator, a steam superheater and a fuel electrode gas heater can be provided, thus considerably decreasing the size of connection pipes, thereby reducing the size of a fuel cell system.

In addition, according to the present invention, heat can be supplied to a steam generator, a steam superheater and a fuel electrode gas heater via heat exchange with air electrode exhaust gas, without additional supply of thermal energy.

In addition, according to the present invention, a steam generator and a steam superheater in which the direction of steam is set to an opposite gravity direction can be provided, thus increasing the residence time of droplets and achieving complete steaming via heat source supply, thereby precisely controlling the droplets.

In addition, according to the present invention, the temperature of fuel electrode gas can be elevated to be high via heat exchange of air electrode exhaust gas.

In addition, according to the present invention, a steam generator for a fuel cell with dual use for heating fuel electrode gas can be easily manufactured at reduced production and manufacturing costs.

### Description of Drawing

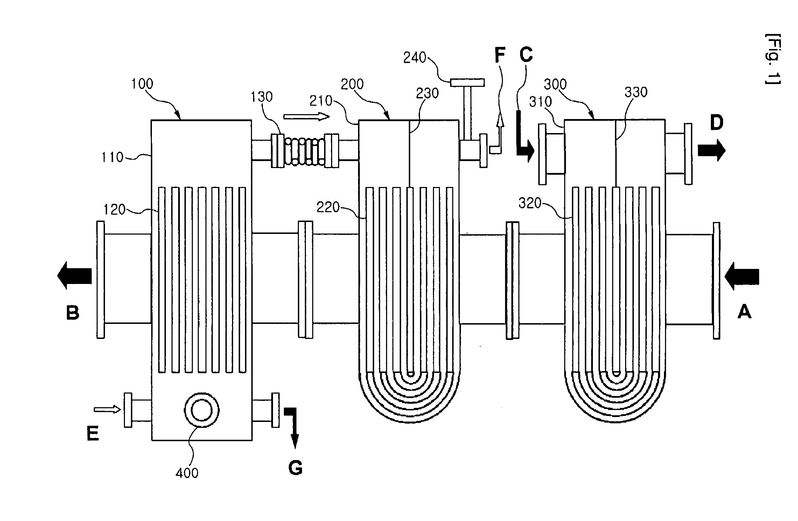

FIG. 1 is a schematic cross-sectional view showing a steam generator for a fuel cell with dual use for heating fuel electrode gas according to the present invention.

### * Description of the Reference Numerals in the Drawing *

100: steam generator
110: steam generator chamber
120: steam generator tube sheet
130: extendable tube
200: steam superheater
210: steam superheater chamber
220: steam superheater tube sheet
230: steam superheater inlet-outlet separator
240: pressure check connector
300: fuel electrode gas heater
310: fuel electrode gas heater chamber
320: fuel electrode gas heater tube sheet
330: fuel electrode gas heater inlet-outlet separator
400: preheater

### Best Mode

Hereinafter, a detailed description will be given of a steam generator for a fuel cell with dual use for heating fuel electrode gas according to the present invention with reference to the appended drawing, but the present invention is not limited to the following example, and will be able to be embodied in various other forms within the range that does not deviate from the scope of the present invention by a person having ordinary skill in the art.

### <Example>

FIG. 1 is a schematic cross-sectional view showing a steam generator for a fuel cell with dual use for heating fuel electrode gas according to the present invention.

As shown in FIG. 1, the steam generator for a fuel cell with dual use for heating fuel electrode gas according to the present invention may be configured as a single unit comprising a steam generator 100, a steam superheater 200, and a fuel electrode gas heater 300. The steam generator 100, the steam superheater 200, and the fuel electrode gas heater 300 are sequentially connected with an air electrode exhaust gas flow path through which the hot air electrode exhaust gas passes, so as to receive heat supply via heat exchange.

The steam generator 100 includes a steam generator chamber 110 for transporting air electrode waste heat and defining the contour of a structure, and tube sheets 120 for heat exchange to generate steam. The steam generator chamber 110 may contain the tube sheets 120 for heat exchange therein, and the configuration thereof is not particularly limited so long as heat exchange with the air electrode exhaust gas may be carried out.

Specifically according to the operating principle of the steam generator 100, high-pressure purified water is introduced into the steam generator chamber 110 of the steam generator 100 according to the present invention via a purified water inlet E, and is uniformly dispersed in the manifold upstream of the tubes. Subsequently, the dispersed water is heat exchanged with the air electrode waste heat of the air electrode exhaust gas flow path by means of the tube sheets 120 for heat exchange, and is thus evaporated into steam. As such, the evaporated water is supplied into the steam superheater 200 via the extendable tube 130.

The steam superheater 200 includes a steam superheater chamber 210, steam superheater tube sheets 220, and a steam superheater inlet-outlet separator 230. The steam superheater chamber 210 functions to transport air electrode waste heat and to define the contour of a structure, the steam superheater tube sheets 220 are used to superheat the steam generated from the steam generator, and the steam superheater inlet-outlet separator 230 is located on the steam superheater tube sheets 220 so that the inlet and the outlet are separated. On the other hand, the steam superheater 200 may contain the steam superheater tube sheets 220 therein, and the configuration thereof is not particularly limited, so long as heat exchange with the air electrode exhaust gas may be carried out.

Specifically according to the operating principle of the steam superheater 200, the steam superheater 200 is provided with a steam inlet through which the steam generated from the steam generator 100 is fed, and the fed steam is heat exchanged with the air electrode exhaust gas of the air electrode exhaust gas flow path by means of U-shaped steam superheater tube sheets 220 and is thus superheated, and then discharged to the outside via a steam outlet.

When the U-shaped steam superheater tube sheets 220 are used in this way, the steam outlet is disposed in an opposite gravity direction, and the residence time of fine droplets and steam may be effectively increased. The inlet and the outlet are separated via the steam superheater inlet-outlet separator 230 on the steam superheater tube sheets 220.

The steam superheater 200 may further include a pressure check connector 240 for controlling the pressure of the system. The pressure check connector 240 may be formed over the steam outlet. The pressure check connector 240 may be connected using a rupture disk, etc., thereby preventing the pressure of the steam outlet from excessively increasing.

Additionally, in order to precisely control the droplets, a control process (not shown) may be performed, in which water diverges from the purified water inlet E of the steam generator 100, passes through a preheater 400, is vaporized by means of a small heat exchanger using waste heat emitted from a controllable bypass water preheater G, and is then supplied to the steam outlet F of the steam superheater 200.

The fuel electrode gas heater 300 includes a fuel electrode gas heater chamber 310, fuel electrode gas heater tube sheets 320, and a fuel electrode gas heater inlet-outlet separator 330. The fuel electrode gas heater chamber 310 functions to transport air electrode waste heat and to define the contour of a structure, and the fuel electrode gas heater tube sheets 320 are used to elevate the temperature of the fuel electrode gas. The fuel electrode gas heater inlet-outlet separator 330 is positioned on the fuel electrode gas heater tube sheets 320 so that the inlet and the outlet are separated. The fuel electrode gas heater 300 may contain the fuel electrode gas heater tube sheets 320 therein, and its configuration is not particularly limited so long as heat exchange with the air electrode exhaust gas may be conducted.

Specifically, according to the operating principle of the fuel electrode gas heater 300, the fuel electrode gas heater 300 is provided with a fuel electrode gas inlet C through which the fuel electrode gas is fed, and the fed fuel electrode gas is heat exchanged with the air electrode exhaust gas of the air electrode exhaust gas flow path by means of U-shaped fuel electrode gas heater tube sheets 320 and is thus elevated in temperature, and is then discharged to the outside via a fuel electrode gas outlet D.

The air electrode exhaust gas is fed via the air electrode waste heat inlet A of the air electrode exhaust gas flow path, and is heat exchanged with each of the fuel electrode gas heater 300, the steam superheater 200, and the steam generator 100, and is then discharged via the air electrode waste heat outlet B of the air electrode exhaust gas flow path.

In the steam generator for a fuel cell with dual use for heating fuel electrode gas according to the present invention, the waste heat of the air electrode exhaust gas can be utilized in the sequence of the fuel electrode gas heater 300 requiring the increase in the temperature to at least 600°C, the steam superheater 200 for evaporating fine droplets of the generated steam, and the steam generator 100 for steaming the purified water, thereby maximizing waste heat use efficiency. Furthermore, the need for an additional heating system for a high-temperature fuel cell is obviated, thus reducing the size of system and pipes.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A steam generator for a fuel cell with dual use for heating fuel electrode gas, which is configured as a single unit comprising:
a steam generator (100) for heating introduced water to generate steam;
a steam superheater (200) for supplying superheat to the steam to elevate a temperature of the steam; and
a fuel electrode gas heater (300) for supplying heat to fuel electrode gas to elevate a temperature of the fuel electrode gas.

2. The steam generator of claim 1, wherein the steam generator (100) comprises a steam generator chamber (110) and steam generator tube sheets (120).

3. The steam generator of claim 1, wherein the steam superheater (200) comprises a steam superheater chamber (210), steam superheater tube sheets (220), and a steam superheater inlet-outlet separator (230).

4. The steam generator of claim 1, wherein the fuel electrode gas heater (300) comprises a fuel electrode gas heater chamber (310), fuel electrode gas heater tube sheets (320), and a fuel electrode gas heater inlet-outlet separator (330).

5. The steam generator of claim 3, wherein the steam superheater (200) further comprises a pressure check connector (240) for controlling pressure.

6. The steam generator of claim 1, wherein the steam generator (100) and the steam superheater (200) are connected to each other using an extendable tube (130).

7. The steam generator of claim 1 or 2, wherein the steam generator (100) further comprises a preheater (400).

8. The steam generator of any one of claims 2 to 4, wherein the tube sheets are U-shaped tube sheets.

9. The steam generator of any one of claims 1 to 6, further comprising a small heat exchanger.
